Europäisches Patentamt

European Patent Office

Office européen des brevets

(19)

(11) Numéro de publication : **0 322 284 B1**

# (12) FASCICULE DE BREVET EUROPEEN

(45) Date de publication du fascicule du brevet :
**19.02.92 Bulletin 92/08**

(51) Int. Cl.⁵ : **C03B 23/023,** C03B 27/04, C03B 25/08, C03B 29/04

(21) Numéro de dépôt : **88403193.1**

(22) Date de dépôt : **15.12.88**

(54) **Procédé et dispositif pour le refroidissement des feuilles de verre bombées.**

(30) Priorité : **22.12.87 FR 8717885**

(43) Date de publication de la demande :
**28.06.89 Bulletin 89/26**

(45) Mention de la délivrance du brevet :
**19.02.92 Bulletin 92/08**

(84) Etats contractants désignés :
**BE CH DE ES FR GB IT LI LU NL SE**

(56) Documents cités :
**FR-A- 7 626 910
GB-A- 2 094 290
US-A- 2 244 715
US-A- 2 298 709
US-A- 3 222 155
US-A- 3 249 415
US-A- 4 343 645**

(73) Titulaire : **SAINT-GOBAIN VITRAGE INTERNATIONAL
18, avenue d'Alsace
F-92400 Courbevoie (FR)**

(72) Inventeur : **Lecourt, Jean
32, Rue Jouvenet
F-75016 Paris (FR)**
Inventeur : **Legros, Désiré
19, Chemin de Velaine
B-5790 Jemeppe/Sambre (BE)**
Inventeur : **Granville, André
243b, Rue de Falisolle
B-5700 Auvelais (BE)**

(74) Mandataire : **de Toytot, Robert et al
SAINT-GOBAIN RECHERCHE 39 quai Lucien
Lefranc B.P. 135
F-93304 Aubervilliers Cédex (FR)**

EP 0 322 284 B1

## Description

L'invention concerne les techniques de refroidissement de feuilles de verre après qu'elles aient été chauffées en particulier pour les bomber.

Lorsqu'on désire donner à une feuille de verre une forme non plane, par exemple au cours de la fabrication d'un vitrage automobile, on porte la feuille plane à une température supérieure à la température de transformation du verre, on provoque la déformation soit en contraignant le verre malléable à épouser une forme rigide, soit -et il est alors placé horizontalement- en le laissant se déformer sous son propre poids. Une fois la forme voulue obtenue, on effectue un refroidissement contrôlé du verre. Les procédés de refroidissement les plus couramment employés sont la trempe et la recuisson. La première qui consiste en général à souffler énergiquement sur le verre lui procure, une fois refroidi, un état de précontrainte qui augmente sa résistance à la flexion et au choc thermique. Ce procédé est utilisé en particulier pour la fabrication des vitrages qui équipent les côtés ou l'arrière des automobiles. Dans l'autre procédé, la recuisson, on veut au contraire permettre la relaxation des contraintes pendant le refroidissement en effectuant celui-ci de manière très progressive. On obtient dans ce dernier cas, un verre recuit dont le niveau de contraintes, faible dans l'épaisseur du verre, permet éventuellement de découper le produit fini et qui, dans le cas d'un vitrage automobile, évite une casse explosive en cas d'impact d'un gravillon. Cette technique est donc particulièrement adaptée à la fabrication des pare-brise. Alors, ce sont deux feuilles de verre superposées qui sont simultanément chauffées, bombées et refroidies pour être ensuite assemblées deux à deux à l'aide d'une feuille intercalaire plastique.

Mais un pare-brise d'automobile est soumis à des conditions de manutention avant son montage définitif sur la chaine de production de voitures ou à des conditions d'usage après mise en circulation du véhicule qui exigent des performances mécaniques adaptées. Un verre recuit est fragile et il convient de limiter les risques de casse soit lors des manipulations de montage soit par choc thermique, par exemple, lorsque dans la voiture, l'on souffle de l'air chaud sur la face interne du pare-brise froid pour le désembuer ou le dégivrer.

Un méthode bien connue consiste à souffler modérément à la périphérie des feuilles de verre au début de leur refroidissement pour créer dans cette zone une légère précontrainte de compression qui limite les risques de casse ultérieurs. Ainsi par exemple dans le four de bombage de vitrages feuilletés décrit dans la demande de brevet européen EP-A-0 317 409, (publié le 24 mai 1989 et donc, faisant parti de l'art antérieur, conformément à l'article 54 (3) CBE), on trouve, après les cellules où s'effectue le bombage du verre par gravité, une cellule dite cellule de soufflage où l'on provoque, pendant le séjour du verre, un soufflage dans la zone périphérique de la feuille.

Dans le brevet FR-B-2 323 650 on préconise ainsi de créer une contrainte de compression plane de 200 à 500 Kg/cm² à la partie périphérique de la surface extérieure des plaques de verre feuilleté notamment pour pare-brise. Cependant, la méthode proposée, si elle spécifie bien comment obtenir la contrainte voulue à la dite partie périphérique n'explique pas comment protéger la partie centrale des plaques de verre ni a fortiori comment adapter les conditions de soufflage à des vitrages de dimensions différentes.

Pour effectuer le soufflage, on utilise habituellement des hottes de soufflage qui ont une forme de tronc de pyramide. L'air est guidé par les parois puis s'échappe dans le passage libre entre le bord de la hotte et le verre. Au centre, la circulation de l'air est beaucoup plus lente : l'échange thermique est donc privilégié à la périphérie. Pour donner entière satisfaction, ce système nécessite que les dimensions de la feuille de verre et de la hotte soient adaptées les unes aux autres. Si l'on veut traiter des feuilles de dimensions différentes avec la même hotte, la maîtrise du phénomène devient difficile. En particulier pour les voitures de petites séries ou lorsque la demande est très diversifiée comme sur le marché des produits de remplacement, on peut désirer alterner les productions de modèles différents. Il serait nécessaire dans ce cas de changer la hotte de soufflage en changeant le modèle. Ceci n'est pas réalisable car les possibilités d'adaptation du système comportant une hotte donnée sont faibles. Seul, le débit de l'air peut être varié, soit en changeant la pression en amont de la hotte, soit en variant la distance de la hotte au verre. Mais, ce faisant, on change aussi la surface traitée ainsi que la répartition des pressions d'air sur cette surface. Il est pratiquement impossible dans ces conditions et sur les modèles de taille et d'épaisseurs différentes de maîtriser à la fois, la largeur de la zone précontrainte sur toute la périphérie de la feuille de verre et la valeur de cette précontrainte.

On aurait pu envisager d'utiliser des systèmes prévus à l'origine pour effectuer la trempe des verres de dimensions variées. C'est ainsi que la demande de brevet européen EP-A-0 246 123 propose l'utilisation d'un caisson de soufflage réglable, où des tiroirs permettent d'obturer certaines zones. On pourrait utiliser le même dispositif pour cacher la partie centrale du caisson sur une surface d'autant plus grande que le pare-brise est lui-même plus grand. Mais les commandes mécaniques de ces systèmes sont délicates et leur fonctionnement dans des cellules chaudes et difficiles d'accès poserait des problèmes que la présente invention permet d'éviter.

Pour résoudre le problème de l'adaptation du soufflage à des dimensions de vitrage différentes,

2

l'invention propose un procédé, et un dispositif, de soufflage destiné à créer une contrainte de compression à la périphérie d'une feuille de verre, en particulier d'un pare-brise feuilleté au cours de son refroidissement, où, au lieu de guider l'air seulement dans une hotte en forme de canal évasé, on lui fait longer un déflecteur qui, en protégeant la partie centrale de la feuille de verre, permet à l'air d'atteindre seulement sa périphérie. Le déflecteur ayant une forme pyramidale, donne de ce fait aux courants d'air, une direction précise.

Pour adapter le soufflage à des feuilles de verre différentes, le procédé de l'invention prévoit qu'en écartant plus ou moins le dispositif précédent de la feuille de verre chaud, on souffle sur leur périphérie en neutralisant une zone centrale plus ou moins grande.

Dans une variante de l'invention, on utilise en plus du déflecteur pyramidal précédent, un conduit de forme évasée formant jupe entourant le déflecteur, cette jupe est avantageusement pyramidale comme le déflecteur. En modifiant la distance du conduit évasé et du déflecteur, on peut modifier le débit et/ou la vitesse de l'air.

Dans une autre forme du procédé de l'invention on oriente plus précisément les filets d'air entre la jupe qui termine le conduit et le déflecteur à l'aide de volets parallèles aux faces du déflecteur pyramidal ces volets étant associés pour former des ensembles troncpyramidaux. On peut associer plusieurs de ces ensembles et, en les positionnant différemment les uns par rapport aux autres, on peut changer la répartition des pressions dans la zone de soufflage.

Le fonctionnement de l'invention apparaîtra plus clairement dans la discription des figures qui suit.

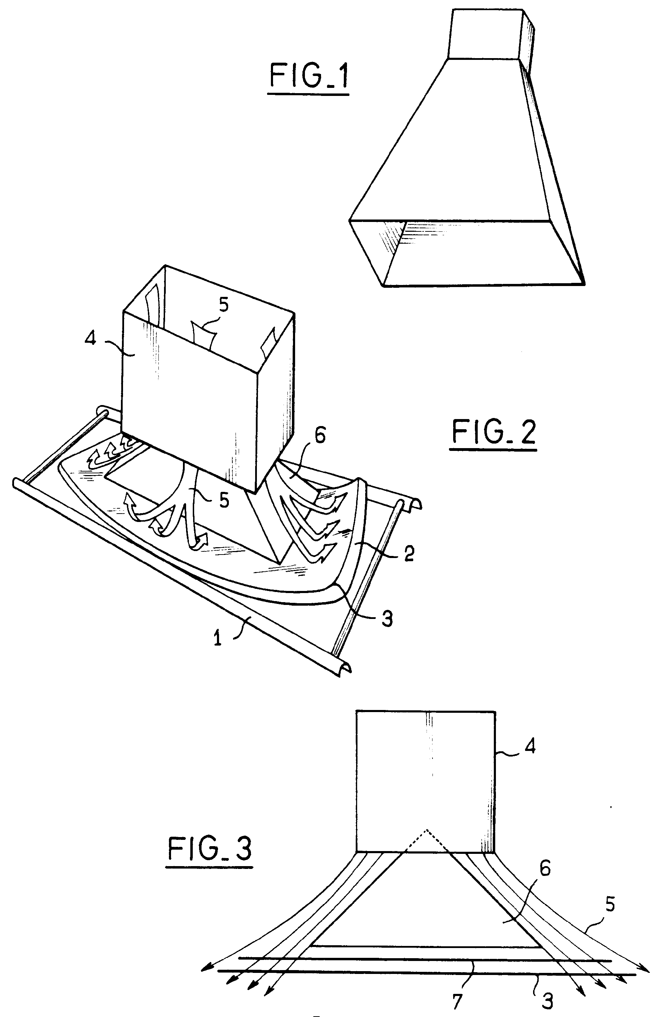

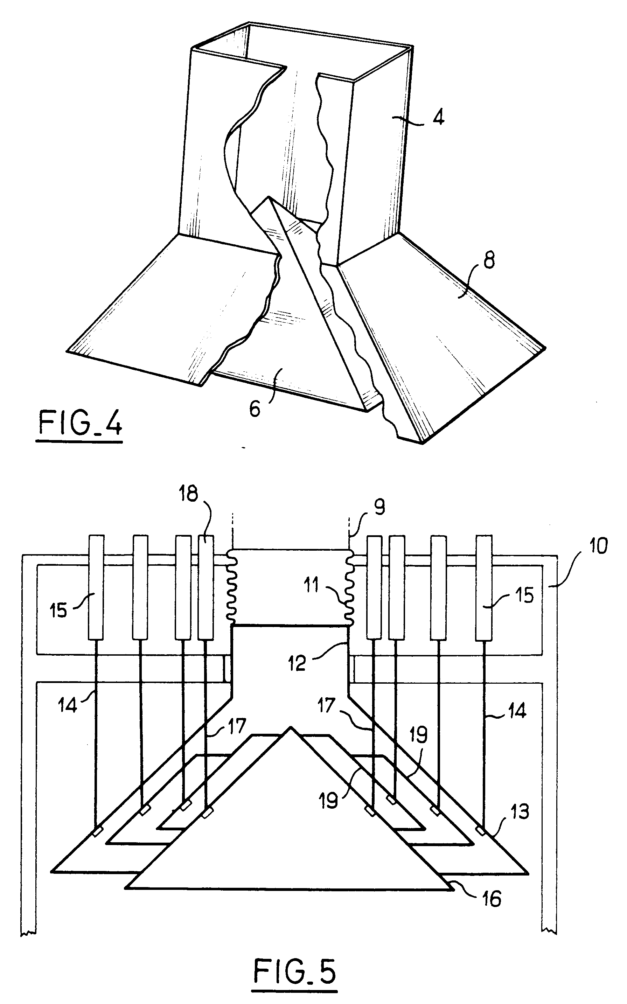

La figure 1 représente une hotte de soufflage traditionnelle, la figure 2 représente un déflecteur pyramidal selon l'invention. La figure 3 montre schématiquement l'effet de la variation de la distance déflecteur - feuille de verre sur la surface de la zone soufflée. Sur la figure 4, on voit un déflecteur et un conduit avec sa jupe pyramidale qui l'entoure, quant à la figure 5, elle représente un ensemble de soufflage avec un déflecteur, un conduit et deux ensembles de volets.

La figure 1 représente une hotte de soufflage telle qu'on l'utilise habituellement dans les fours de bombage de feuilles de verre par gravité. Dans de tels fours, les feuilles de verre sont portées à plat sur des chariots par l'intermédiaire de formes métalliques appelées "squelettes". Le chariot permet de déplacer la feuille de verre pas à pas, d'une cellule à une autre, le verre s'échauffe progressivement en se déformant sous son propre poids jusqu'à venir épouser sur sa périphérie, la forme du squelette. Après le bombage on refroidit le verre progressivement en le transportant dans plusieurs cellules de refroidissement en évitant de le tremper. Dans la ou les premières de ces cellules, en général, on souffle modérément à la périphérie de la feuille de verre de manière à créer une légère précontrainte périphérique. Il s'agit d'obtenir dans une zone d'une largeur d'environ 15 mm, une contrainte superficielle de compression d'une valeur comprise entre 60 et 250 kg/cm$^2$ qui procure au verre dans ces régions une résistance améliorée aussi bien vis à vis des chocs mécaniques que vis à vis des contraintes thermiques en utilisation. Dans les fours où les campagnes de production sont longues, c'est-à-dire dans lesquels, pendant de longues périodes, on produit le même modèle de vitrage, les dispositifs tels que celui de la figure 1 donnent satisfaction, car les dimensions de la hotte sont adaptées à celle du vitrage. Il est même possible de changer légèrement les dimensions du vitrage. Une correction de la hauteur de la hotte ou de la pression d'air en amont suffit en général pour adapter le refroidissement à différents vitrages. Mais si l'on veut pouvoir beaucoup modifier les dimensions entre un pare-brise et le suivant cette latitude de réglage est insuffisante et le rendement de production comme la qualité des produits fabriqués en pâtit : si l'on souffle trop fort, on risque de provoquer des déformations du verre ou des casses dans le four et, au contraire si le soufflage est insuffisant, la contrainte de compression obtenue est insuffisante pour obtenir l'effet d'amélioration de la résistance souhaité.

Le procédé proposé par l'invention permet une grande amplitude des réglages ainsi qu'une modification immédiate de ceux-ci, ce qui permet de changer instantanément le type de pare-brise fabriqué et même de modifier de manière impromptue le programme de fabrication en modifiant les valeurs de consigne. Les réglages du soufflage au moment où le nouveau vitrage entrera dans chaque zone de soufflage sont alors instanément adaptés. En effet les fours modernes sont gérés par microprocesseur et les valeurs de consigne correspondant à chaque type de vitrage sont en mémoire et peuvent facilement être appelées.

La figure 2 présente dans une vue en perspective le fonctionnement du procédé de l'invention. On voit un cadre métallique (1) qui porte le "squelette" (2). La feuille de verre (3) découpée à ses dimensions définitives est placée sur le squelette en position horizontale et l'ensemble : feuille de verre, squelette et cadre est porté par un chariot non représenté qui le transporte successivement d'une cellule à l'autre du four. Dans le four, on trouve successivement des cellules de chauffage dans lesquelles le verre atteint une température uniforme, toujours la même, quelle que soit sa forme ou son épaisseur, puis des cellules de bombage où le chauffage est adapté à la déformation souhaitée, les zones les plus bombées devant être plus chaudes. A la sortie des cellules de bombage, l'ensemble est entraîné par le chariot dans la (ou la première) zone de soufflage. C'est le dispositif de soufflage selon l'invention situé dans cette zone qui est représenté schématiquement dans une vue en perspective, figure 2. Un large conduit (4) amène de l'air à une température et à un débit définis pour qu'il soit soufflé sur le pare-brise. L'air introduit provient en général d'une des cellules de refroidissement situées en aval, cet air chaud est mélangé dans des proportions adéquates à de l'air frais pris à l'extérieur du four pour lui donner une température définie, généralement comprise entre 40 et 50°C. Sur la figure, les flèches (5) symbolisent les filets d'air. L'air arrive sur un déflecteur (6) en forme de pyramide dont il frappe le sommet. La base de ce déflecteur a un contour qui dépend de la forme générale des feuilles de verre à traiter. Dans une forme préférée de réalisation de l'invention, la pyramide est à base rectangulaire, l'angle au sommet que les petites faces font avec l'axe de la pyramide est d'environ 30°, celui des grandes faces d'environ 45°. Pour traiter des vitrages dont les dimensions peuvent atteindre 190 cm x 110 cm, la dimension du rectangle, base de la pyramide, pourra être avantageusement d'environ 90 cm x 50 cm.

Sur la figure 3, on a représenté schématiquement le dispositif de soufflage comprenant un conduit d'air (4), un déflecteur pyramidal (6) et des filets d'air (5) guidés par le conduit et par le déflecteur. Cet air vient frapper la feuille de verre (3) qu'on a représentée plane pour simplifier. On a représenté également une deuxième position pour la feuille de verre de plus petite dimension (7). Pour que celle-ci soit soufflée correctement il a fallu diminuer sa distance avec le déflecteur (6), de cette manière, la zone couverte par les filets d'air se trouve réduite par rapport à celle de la feuille de verre (3). On comprend ainsi le principe de l'adaptation du soufflage à des dimensions de verre différentes. Mais dans la pratique toutes les feuilles de verre se déplacent sensiblement dans le même plan et c'est la position du déflecteur qui change.

Sur la figure 4, on a représenté une autre forme de réalisation de l'invention, on y trouve toujours le déflecteur pyramidal (6) et le conduit d'amenée d'air (4), mais cette fois le conduit est équipé d'une jupe (8) également en forme de tronc de pyramide. Les faces de celle-ci sont de préférence parallèles à celles du déflecteur (6). On voit qu'en déplaçant l'une par rapport à l'autre, parallèlement à elles-mêmes, les deux pyramides, on peut modifier le débit de l'air canalisé.

Sur la figure 5, on voit la forme la plus complète de réalisation de l'invention. L'ensemble du système de soufflage réalisé en tôle d'acier inoxydable est placé dans une cellule de soufflage d'un four de bombage, il est suspendu à un bâti métallique (10), lui-même lié à la charpente du four. L'air arrive par la canalisation fixe (9) à une pression et une température définies, il passe ensuite dans une canalisation souple (11) avant d'arriver dans le conduit d'air (12) suivi de sa jupe (13). Le conduit d'air (12) et la jupe (13) peuvent être déplacés verticalement à l'aide des tiges (14) commandés par des moyens mécaniques (15) tels que des vérins. Mais on peut également utiliser des crémaillères, des vis sans fin etc... ces moyens sont eux-mêmes fixés au bâti (10). L'air sortant du conduit (12) frappe le sommet du déflecteur pyramidal (16), ce déflecteur est accroché par des tiges (17) à des moyens de levage (18).

Entre la jupe (13) et le déflecteur pyramidal (16), on a représenté deux ensembles de volets (19) en forme de tronc de pyramide qui sont équipés chacun de leurs moyens de déplacement autonomes. S'il était nécessaire, d'autres systèmes de volets pourraient être également prévus.

Dans cette forme de réalisation préférée de l'invention, on est donc en présence de plusieurs formes pyramidales identiques emboitées les unes dans les autres. Chacune peut se mouvoir verticalement indépendamment des autres. Leur forme est telle que si le déflecteur (16) était dans sa position la plus haute et la jupe (13) dans sa position la plus basse, les quatre pyramides viendraient en contact étroit les unes avec les autres.

Pour procéder au réglage du système, on opère de la manière suivante : on commence par placer le déflecteur (16) à une distance telle du verre que le soufflage s'effectue dans la zone voulue du pare-brise. Le réglage suivant est celui de la hauteur de la jupe (13), on définit ainsi une section de passage pour l'air de soufflage, qui permet d'obtenir le refroidissement - donc l'état de contraintes - souhaité. Le dernier réglage est celui des systèmes de volets (19), il permet d'orienter finement les jets d'air.

Dans l'industrie moderne, et c'est le cas de la fabrication des vitrages autobiles, en particulier des pare-brise, les problèmes d'une réponse rapide à la demande du marché en limitant au maximum les stocks sont devenus déterminants. Il est donc essentiel de pouvoir disposer d'outils de production extrèmement souples, c'est-à-dire qui s'adaptent instantanément à la demande. On a ainsi développé des fours de bombage thermique par gravité avec une inertie thermique très faible. Ces fours, comme, par exemple celui qui est décrit dans la demande de brevet français FR 87-16 083 autorisent les productions successives de vitrages de caractéristiques d'épaisseur, de couleur ou de dimensions très différentes. On peut même envisager de modifier au dernier moment un programme de fabrication en insérant à l'improviste, un chariot nouveau au milieu du train des chariots en attente à l'entrée du four. Le temps de réaction de tels fours est tellement court qu'en général, le bombage du nouveau vitrage s'effectue sans problème. Il est donc particulièrement utile de disposer, ensuite, d'un procédé de soufflage qui s'adapte lui-aussi à l'improvisation. Le procédé de l'invention permet au système de réagir instantanément à une commande modifiant le programme de l'ordre de passage des différents vitrages dans le four. Le procédé est mis en oeuvre de la manière suivante : à la suite de tests préliminaires, on a défini pour chaque dimension de pare-brise un réglage optimum des quatre troncs de pyramide de la figure 5 : on a commencé par définir la position du déflecteur pyramidal (16), il cache la partie centrale du vitrage que l'air de soufflage n'atteindra pas et il dirige l'air sur les bords, là où la contrainte de compression devra être la plus forte. Dans le cas où la forme du déflecteur ne correspond pas exactement à la forme du vitrage, par exemple, du fait que le rapport des dimensions de sa base, longueur/largeur est très différent du rapport longueur/largeur du vitrage lui-même on rapprochera ou on éloignera le déflecteur de manière à souffler sur les quatre bords. C'est par l'ajustement du débit et de la vitesse de l'air que les conditions les meilleures devront être trouvées. C'est, dans un deuxième temps, en réglant la hauteur du conduit (12) terminé par la jupe (13) et la pression de l'air en amont que les meilleures conditions de soufflage seront trouvées. Les derniers paramètres à déterminer sont les hauteurs respectives des volets intermédiaires (19). Elles définiront les bonnes répartitions de pression dans la zone de soufflage. Une fois trouvées - pour chaque type de vitrage - ces conditions de travail, les réglages correspondants de tous les moyens de levage tels que (15) ou (18) sont enregistrés dans la mémoire du micro-processeur de conduite du four.

Pour mettre en oeuvre le procédé selon l'invention, au moment où un nouveau type de vitrage quitte la cellule de bombage (ou la cellule tampon s'il en existe une) pour pénétrer dans la cellule de soufflage, on donne l'ordre au micro-processeur de conduite du four de régler les moyens de levage tels que (15) et (18) aux valeurs mémorisées correspondant au vitrage en question. Ainsi le procédé de soufflage sera mis en oeuvre automatiquement et le but recherché sera atteint : quel que soit l'ordre de succession des différents vitrages à la suite les uns des autres, même, s'il est improvisé, le soufflage le mieux adapté au vitrage en question pourra être mis en oeuvre instantanément.

## Revendications

1. Procédé de soufflage destiné à créer une contrainte de compression à la périphérie d'une feuille de verre, en particulier d'un pare-brise feuilleté (3) au cours de son refroidissement, **caractérisé en ce que** l'air de soufflage est guidé à l'extérieur d'un déflecteur de forme sensiblement pyramidale (16) dont il frappe le sommet et en ce que les dimensions de la zone soufflée sont ajustées en modifiant la distance entre le déflecteur pyramidal (16) et la feuille de verre (3).

2. Procédé de soufflage selon la revendication 1, **caractérisé en ce que** le débit d'air est réglé en variant la distance entre le déflecteur pyramidal (16) et un conduit (12) terminé par une jupe (13) de forme également pyramidale qui l'entoure.

3. Procédé de soufflage selon la revendication 2, **caractérisé en ce que** l'air circulant entre le déflecteur de forme pyramidale (16) et la jupe (13) de forme également pyramidale qui l'entoure est guidé par un ou plusieurs ensembles de volets (19) assemblés en troncs de pyramide dont les faces sont sensiblement parallèles à celles dudit déflecteur et à celles dudit conduit.

4. Procédé de soufflage selon la revendication 3, **caractérisé en ce que** la répartition des pressions d'air dans la zone de soufflage est ajustée en modifiant les positions du ou des ensembles de volets (29), du déflecteur de forme pyramidale (16) et du conduit avec la jupe (13) qui l'entoure.

5. Dispositif destiné à réaliser le soufflage d'une feuille de verre chaud en particulier d'un pare-brise feuilleté (3) pour créer une contrainte de compression à sa périphérie, **caractérisé en ce qu'**il comporte un déflecteur de forme pyramidale (16) qui protège la partie centrale de la feuille de verre (3) et en ce que le déflecteur (16) ccomporte des moyens de déplacement par rapport à la feuille de verre.

6. Dispositif selon la revendication 5, **caractérisé en ce qu'**un conduit avec une jupe (13) de forme également pyramidale entoure le déflecteur de forme pyramidale (16) et comporte des moyens de réglage pour régler l'écartement de la jupe (13) et du déflecteur (16).

7. Dispositif selon la revendication 6, **caractérisé en ce qu'**il comporte des volets (19) sensiblement parallèles aux faces du déflecteur pyramidal (16), ces volets (19) constituant des ensembles en forme de troncs de pyramide mobiles entre le déflecteur (16) et la jupe (13) de forme également pyramidale.

## Claims

1. Blowing process for producing a compressive stress on the periphery of a glass sheet, in particular a laminated windscreen (3) during its cooling, characterized in that the blowing air is guided to the exterior of a substantially pyramidal deflector (16), whose apex it strikes and in that the dimensions of the blown area are adjusted by modifying the distance between the pyramidal deflector (16) and the glass sheet (3).

2. Blowing process according to claim 1, characterized in that the air flow rate is regulated by varying the distance between the pyramidal deflector (16) and a duct (12) terminated by a pyramidal skirt (13) surrounding it.

3. Blowing process according to claim 2, characterized in that the air circulating between the pyramidal deflector (16) and the pyramidal skirt (13) surrounding it is guided by one or more groups of flaps (19) assembled in the form of frustums, whose faces are substantially parallel to those of the deflector and to those of the duct.

4. Blowing process according to claim 3, characterized in that the distribution of the air pressures in the blowing zone is adjusted by modifying the position of the group or groups of flaps (29), the pyramidal deflectors (16) and the duct with the skirt (13) surrounding it.

5. Apparatus for blowing a hot glass sheet and in particular a laminated windscreen (3) for creating a compressive stress on its periphery, characterized in that it comprises a pyramidal deflector (16) protecting the central portion of the glass sheet (3) and in that the deflector (16) has displacement means with respect to the glass sheet.

6. Apparatus according to claim 5, characterized in that a duct with a pyramidal skirt (13) surrounds the pyramidal deflector (16) and has regulating means for regulating the spacing of the skirt (13) and the deflector (16).

7. Apparatus according to claim 6, characterized in that it has flaps (19) substantially parallel to the faces of the pyramidal deflector (16), said flaps (19) constituting frustum-shaped groups moving between the deflector (16) and the pyramidal skirt (13).

**Patentansprüche**

1. Blasverfahren zur Erzeugung einer Druckbeanspruchung an der Peripherie einer Glasscheibe, im besonderen einer Mehrschicht-Windschutzscheibe (3) während ihres Abkühlens, **dadurch gekennzeichnet, daß** die Blasluft zur Außenseite eines im wesentlichen pyramidenförmigen Deflektors (16) geleitet wird, auf dessen Spitze sie auftrifft, und daß die Ausmaße des dem Blasen unterzogenen Bereiches durch Verändern des Abstandes zwischen dem pyramidenförmigen Deflektor (16) und der Glasscheibe (3) reguliert werden.

2. Blasverfahren nach Anspruch 1, **dadurch gekennzeichnet, daß** die Luftmenge dadurch geregelt wird, daß der Abstand zwischen dem pyramidenförmigen Deflektor (16) und einer Leitung (12) variiert wird, die in einer den Deflektor umgebenden, ebenfalls pyramidenförmigen Schürze (13) endet.

3. Blasverfahren nach Anspruch 2, **dadurch gekennzeichnet, daß** die zwischen dem pyramidenförmigen Deflektor (16) und der diesen umgebenden, ebenfalls pyramidenförmigen Schürze (13) zirkulierende Luft durch einen oder mehrere Gruppen von Luftleitkörpern (19) gelenkt wird, die zu Pyramidenstümpfen zusammengefügt sind, deren Flächen im wesentlichen parallel zu denen des Deflektors und der Leitung sind.

4. Blasverfahren nach Anspruch 3, **dadurch gekennzeichnet, daß** die Verteilung der Luftdrücke in dem Blasbereich dadurch geregelt wird, daß die Positionen des oder der Gruppen von Luftleitkörpern (19), des pyramidenförmigen Deflektors (16) und der Leitung mit der diesen umgebenden Schürze (13) verändert werden.

5. Vorrichtung zum Beblasen einer heißen Glasscheibe, im besonderen einer Mehrschicht-Windschutzscheibe (3) zur Erzeugung einer Druckbeanspruchung in deren Peripherie, **dadurch gekennzeichnet, daß** sie einen pyramidenförmigen Deflektor (16) umfaßt, der den mittleren Teil der Glasscheibe (3) schützt, und daß der Deflektor (16) eine Einrichtung zum Verschieben gegenüber der Glasscheibe umfaßt.

6. Vorrichtung nach Anspruch 5, **dadurch gekennzeichnet, daß** eine Leitung mit einer ebenfalls pyramidenförmigen Schürze (13) den pyramidenförmigen Deflektor (16) umgibt und eine Einstelleinrichtung zur Regulierung des Abstandes zur Schürze (13) und zum Deflektor (16) umfaßt.

7. Vorrichtung nach Anspruch 6, **dadurch gekennzeichnet, daß** sie Luftleitkörper (19) enthält, die im wesentlichen parallel zu den Flächen des pyramidenförmigen Deflektors (16) sind, wobei diese Luftleitkörper (19) pyramidenstumpfförmige Gruppen bilden, die zwischen dem Deflektor (16) und der ebenfalls pyramidenförmigen Schürze (13) beweglich sind.

FIG_1

FIG_2

FIG_3

FIG.4

FIG.5

8